# EUROPÄISCHE PATENTSCHRIFT

(11) **EP 1 379 791 B1**
(45) Veröffentlichungstag und Bekanntmachung des Hinweises auf die Patenterteilung: **06.10.2004**
(21) Anmeldenummer: 02740274.2
(22) Anmeldetag: 22.04.2002
(51) Int. Cl.: F16C 29/02

(54) **LINEARFÜHRUNG**
LINEAR GUIDE
GUIDE LINEAIRE

(30) Priorität: 20.04.2001 DE 20106914 U
(43) Veröffentlichungstag der Anmeldung: 14.01.2004
(73) Patentinhaber: IGUS SPRITZGUSSTEILE FÜR DIE INDUSTRIE GmbH, D-51147 Köln (DE)
(72) Erfinder: MOSHAMMER, Horst, 53545 Linz am Rhein (DE)
(74) Vertreter: Stachow, Ernst-Walther, Prof. Dr.
(86) Internationale Anmeldenummer: PCT/DE2002/001468
(87) Internationale Veröffentlichungsnummer: WO 2002/086341

(56) Entgegenhaltungen:
- DE-A- 2 623 594
- US-A- 4 702 621

## Beschreibung

Die Erfindung betrifft eine Linearführung mit einer Schiene, die mehrere Laufbahnen aufweist, und einem Schlitten, der den Laufbahnen gegenüberliegend mindestens ein Gleitelement umfasst, das an der von der Schiene abgewandten Seite eine bezüglich der Laufrichtungen der Linearführung geneigte Fläche aufweist, wobei zwischen dem Gleitelement und dem Schlitten ein in den Laufrichtungen der Linearführung verschiebbares Stellelement vorgesehen ist, das mit einer Fläche an der geneigten Fläche des Gleitelements verschiebbar anliegt.

Eine derartige Linearführung ist aus dem Prospekt "DryLin®T"' aus 8/98 der Anmelderin bekannt. Sie besteht aus einer im Wesentlichen T-förmigen Schiene und einem Schlitten mit entsprechend ausgebildeter Laufnut. Die Schiene weist zwei Paar gegenüberliegender und senkrecht zur normalen Belastungsrichtung des Schlittens angeordneter erster Laufbahnen und ein Paar gegenüberliegender und senkrecht zu den ersten Laufbahnen angeordneter zweiter Laufbahnen auf. Den Laufbahnen gegenüberliegend sind im Schlitten Gleitelemente aus einem hoch verschleißfesten Kunststoff mit niedrigem Reibwert vorgesehen. Zur Einstellung eines Spiels sowohl in der normalen Belastungsrichtung des Schlittens als auch quer dazu sind gegenüberliegend zu den Laufbahnen der Schiene, deren Flächennormale der normalen Belastungsrichtung des Schlittens entgegengerichtet ist, und einer der Laufbahnen, deren Flächennormale senkrecht zur normalen Belastungsrichtung weist, die Gleitelemente keilförmig ausgebildet, wobei die zugehörigen Stellelemente in die entgegengesetzte Richtung keilförmig verlaufen. Die Stellelemente lassen sich durch eine Justierschraube gegen die geneigte Fläche der Gleitelemente andrücken, wodurch das zugeordnete Gleitelement, das an seinem der Justierschraube gegenüberliegenden, breiteren Ende gegen ein Widerlager des Schlittens anliegt, zur Schiene hin bewegt wird und sich somit das Spiel zwischen Schlitten und Schiene an dem betreffenden Lagerpunkt verringert. Durch Lösen der Justierschraube kann das Spiel zwischen dem Schlitten und Schiene an dem betreffenden Lagerpunkt vergrößert werden. Zweckmäßigerweise wird beim Lösen der Justierschraube das Stellelement durch eine Druckfeder zurückbewegt.

Die Schiene kann statt zweier Laufbahnen, deren Flächennormalen der normalen Belastungsrichtung des Schlittens entgegengesetzt gerichtet sind, für niedrigere Belastungen auch nur eine, mittig angeordnete Laufbahn und ein entsprechend gegenüberliegendes Gleitelement aufweisen. Die keilförmigen Gleitelemente können, abweichend von der oben beschriebenen Anordnung, auch an anderen Lagerpunkten des Linearlagers angeordnet sein, wo die Einstellung des Spiels gewünscht ist.

Bei den bekannten Linearführungen erfolgt die Einstellung des Spiels in der Regel werkseitig beim Hersteller. Die Voreinstellung kann anhand der Verschiebekraft des Schlittens vorgenommen werden. In vielen Fällen ist jedoch eine Nachjustierung des Lagerspiels erforderlich, die vom Kunden vorgenommen werden muss. Da mit Hilfe der Justierschrauben drei Lagerpunkte nachgestellt werden können, ist eine präzise Einstellung und Kontrolle erforderlich. Es besteht die Gefahr, dass beim Nachstellen das Spiel an einem der Lagerpunkte übermäßig vergrößert oder verkleinert wird.

Der vorliegenden Erfindung liegt die Aufgabe zugrunde, eine Linearführung der eingangs genannten Art so weiterzuentwickeln, dass eine Einstellung des Lagerspiels der Linearführung durch Justierschrauben oder eine andere von Hersteller und/oder Kunden zu betätigende Justiereinrichtung nicht erforderlich ist.

Die Aufgabe wird erfindungsgemäß dadurch gelöst, dass das Stellelement gegen die geneigte Fläche des Gleitelements vorgespannt ist, so dass sich eine Kraftkomponente auf das Gleitelement senkrecht zu dem Gleitelement gegenüberliegenden Laufbahnen ergibt, und die aneinander anliegenden Flächen des Stellelements und Gleitelements korrespondierende Stufen dergestalt aufweisen, dass die Stufen der betreffenden Fläche des Stellelements aufgrund der Vorspannung bei entsprechendem Spiel über die Stufen der geneigten Fläche des in Richtung der Laufbahnen der Schiene bewegten Gleitelements gleiten können.

Aufgrund der erfindungsgemäßen Konstruktion gleitet bei übermäßigem Spiel das Stellelement mit seiner stufenförmigen Fläche so weit über die entsprechenden Stufen des Gleitelements, bis das Spiel zwischen dem Gleitelement und der Laufbahn der Schiene auf ein Mindestmaß verringert ist, so dass die Stufen beider Flächen mit ihren Kanten gegeneinander anliegen. Auf diese Weise wird ein übermäßiges Spiel automatisch verringert, ohne dass eine Einstellung mit Hilfe einer Justierschraube oder einer anderen Justiereinrichtung erforderlich ist.

Zur automatischen Einstellung des Spiels durch das Stellelement muß der Schlitten so belastet werden, dass das vorhandene Spiel sich zwischen dem zugehörigen Gleitelement und der Laufbahn der Schiene ergibt.

In einer bevorzugten Ausführung der Erfindung weisen die Stufen der geneigten Fläche des Gleitelements im Wesentlichen parallel zu den Laufrichtungen der Linearführung verlaufende Abschnitte und in Richtung der Vorspannung des Stellelements mit einem Winkel < 90° ansteigende Abschnitte auf. Die Stufen der an der geneigten Fläche des Gleitelements anliegenden Fläche des Stellelements können dabei entsprechend gestaltet sein.

Der Winkel der ansteigenden Abschnitte der Stufen wird vorzugsweise so gewählt, dass er größer als der Selbsthemmungswinkel und kleiner als der Verkeilungswinkel ist.

In einer zweckmäßigen Weiterentwicklung der Erfindung fallen die im Wesentlichen parallel zu den Laufrichtungen der Linearführung verlaufenden Abschnitte der Stufen in Richtung der Vorspannung des Stellelements leicht ab. Durch den abfallenden Verlauf dieser Abschnitte wird erreicht, dass sich in jedem Falle ein Mindestspiel zwischen dem Gleitelement und der zugeordneten Laufbahn der Schiene ergibt. Gleitet das Stellelement aufgrund seiner Vorspannung über eine Stufenhöhe, die dem verbleibenden Spiel zwischen Gleitelement und zugehöriger Laufbahn der Schiene entspricht, so vergrößert sich das Spiel bei weiterer Verschiebung der Stellelemente, bis die Stufen des Stellelements gegen die Stufen des Gleitelements anliegen. Das sich einstellende Mindestspiel entspricht dann der Tiefe des abfallenden Verlaufs der Stufenabschnitte senkrecht zu den Laufrichtungen der Linearführung.

Eine solche automatische Einstellung eines Mindestspiels zwischen den Gleitelementen und den Laufbahnen der Schiene ist dann besonders vorteilhaft, wenn keine zusätzlichen Elemente mit einer definierten Elastizität zur Gewährleistung eines Spiels vorhanden sind. Erfolgt hingegen ein Ausgleich durch das System, kann auf den abfallenden Verlauf der im Wesentlichen horizontalen Abschnitte der Stufen des Gleitelements und Stellelements verzichtet werden.

Ist ein abfallender Verlauf der betreffenden Stufenabschnitte vorgesehen, so kann dessen Höhe senkrecht zu den Laufrichtungen der Linearführung zwischen 0,01 und 0,1 mm liegen.

Vorzugsweise beträgt die betreffende Höhe zwischen 0,01 und 0,05 mm.

Zur Vermeidung einer Selbsthemmung der Stufenanordnung können die ansteigenden Abschnitte der Stufen der geneigten Fläche des Gleitelements bzw. des Stellelements eine Höhe senkrecht zu den Laufrichtungen der Linearführung zwischen 0,02 und 0,2 mm aufweisen.

Vorzugsweise beträgt diese Höhe zwischen 0,02 und 0,1 mm.

Zur Vorspannung des Stellelements kann eine parallel zu den Laufrichtungen der Linearführung an ihm angreifende Druckfeder vorgesehen sein. Zwecks Platzersparnis ist die Druckfeder vorzugsweise seitlich des Stellelements angeordnet und greift an einem an der betreffenden Seite quer gerichteten Vorsprung an.

Die aneinander liegenden Flächen des Schlittens, des Stellelements und/oder des Gleitelements können teilzylindrisch ausgebildet sein, um einen Ausgleich von Parallelitätsfehlern des Lagers zu ermöglichen. Zum Beispiel kann die geneigte Fläche des Gleitelements teilzylindrisch ausgebildet sein und gegen eine im Querschnitt entsprechend konkav geformte Fläche des Stellelements anliegen.

In einer anderen Ausführung kann die gegen das Gleitelement anliegende Fläche oder eine dieser gegenüberliegende, am Schlitten anliegende Fläche des Stellelements teilzylindrisch ausgebildet sein.

Das Gleitelement besteht vorzugsweise aus einem hoch verschleißfesten Kunststoff mit niedrigem Reibwert. Mit einer Materialpaarung aus einem derartigen Kunststoff für die Gleitelemente und anodisiertem Aluminium für die Schiene konnten beste Ergebnisse erzielt werden.

Im Übrigen kann die Linearführung, was die Ausgestaltung des Schlittens und des Gleitlagers sowie die Anordnung der Gleitpaarungen aus jeweils einer Laufbahn der Schiene und einem Gleitelement des Schlittens anbetrifft, so ausgebildet sein, wie eingangs für bekannte Linearführungen beschrieben. Insbesondere kann die Schiene zwei Paar gegenüberliegender und senkrecht zur normalen Belastungsrichtung des Schlittens angeordneter erster Laufbahnen und ein Paar gegenüberliegender und senkrecht zu den ersten Laufbahnen angeordnete zweite Laufbahnen aufweisen. Der Querschnitt der Schiene kann im Wesentlichen T-förmig ausgebildet sein mit einer entsprechenden Laufnut im Schlitten, wobei die Gleitpaarungen zweckmäßigerweise symmetrisch zur Mittelsenkrechten der Linearführung angeordnet sind. Andere Ausgestaltungen der Schiene und der Laufnut des Schlittens sowie Anordnungen der Gleitpaarungen kommen in Betracht, wenn dies aufgrund besonderer Belastungsverhältnisse zweckmäßig ist.

Bei einer Standardausführung der Linearführung sind den Laufbahnen der Schiene, deren Flächennormalen der normalen Belastungsrichtung des Schlittens entgegengerichtet sind, sowie einer der Laufbahnen, deren Flächennormalen senkrecht zu denjenigen der erstgenannten Laufbahnen gerichtet sind, jeweils ein Gleitelement mit geneigter Fläche und ein entsprechend ausgebildetes Stellelement zugeordnet.

Bei einer derartigen Anordnung ist zur automatischen Einstellung des Spiels der Schlitten gegenüber der Schiene entgegengesetzt zur normalen Belastungsrichtung zu belasten, so dass sich das vorhandene Spiel zwischen den Gleitelementen mit geneigter Fläche und den zugeordneten Laufbahnen der Schiene ergibt.

Ein Ausführungsbeispiel der Erfindung wird im Folgenden anhand der Zeichnung näher beschrieben. In der Zeichnung zeigen:
- Fig. 1: einen Längsschnitt durch eine Linearführung mit in Richtung A belastetem Schlitten,
- Fig. 2: eine vergrößerte Ansicht des in Fig. 1 B gekennzeichneten Ausschnitts,
- Fig. 3: eine stirnseitige Ansicht der Linearführung gemäß Fig. 1 in Richtung C,
- Fig. 4: einen Querschnitt durch die Linearführung gemäß Fig. 1 längs der Linie D-D,
- Fig. 5: einen Längsschnitt durch die Linearführung bei Belastung des Schlittens in Richtung E,
- Fig. 6: eine vergrößerte Ansicht des in Fig. 5 gezeigten Ausschnitts B,
- Fig. 7: eine Frontansicht der Linearführung gemäß Fig. 5 in Richtung C und
- Fig. 8: einen Querschnitt durch die Linearführung gemäß Fig. 5 längs der Linie D-D.

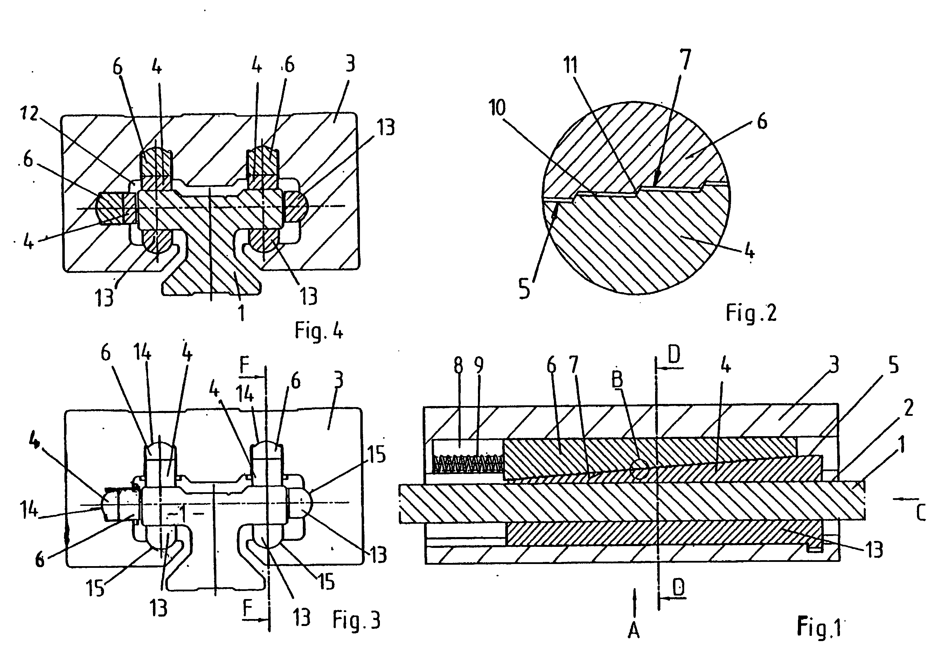

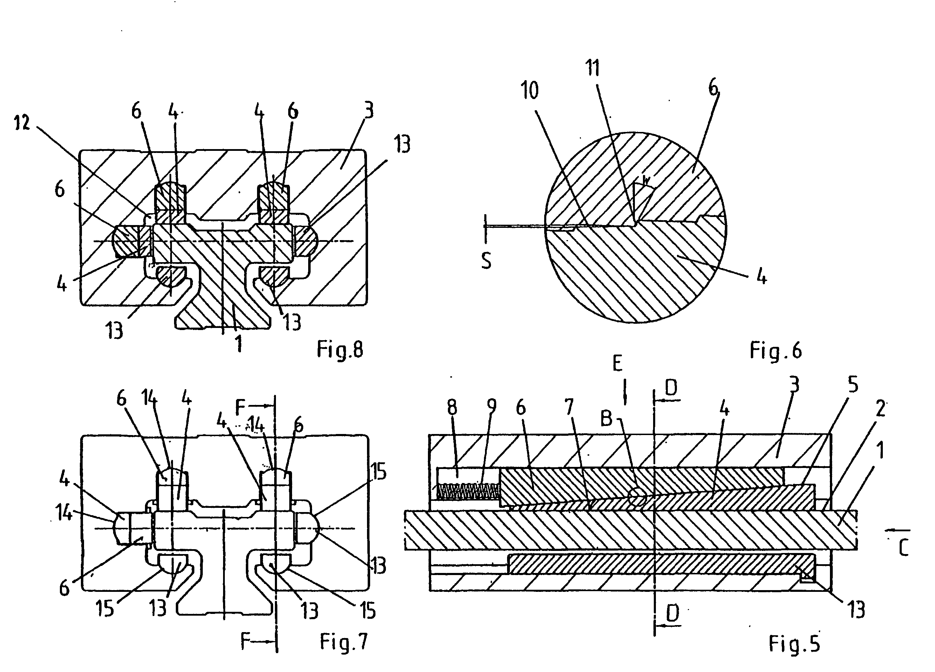

Wie insbesondere aus den Figuren 1 und 5 hervorgeht, besteht die in der Zeichnung dargestellte Linearführung aus einer Schiene 1, die mehrere Laufbahnen 2 aufweist, und einem Schlitten 3, der den Laufbahnen 2 gegenüberliegende Gleitelemente 4 umfasst, die an der von der Schiene 1 abgewandten Seite eine bezüglich der Laufrichtungen der Linearführung geneigte Fläche 5 aufweisen. Zwischen jedem Gleitelement 4 und dem Schlitten 3 ist ein in den Laufrichtungen der Linearführung verschiebbares Stellelement 6 angeordnet, das wie das Gleitelement 4 keilförmig ausgebildet ist und mit einer Fläche 7 an der geneigten Fläche 5 des Gleitelements 4 verschiebbar anliegt.

Wie aus der Zeichnung weiterhin hervorgeht, weist der Schlitten 3 zur Lagerung des Gleitelements 4 und des Stellelements 6 sich in den Laufrichtungen der Linearführung erstreckende im Wesentlichen quaderförmige Ausnehmungen 8 auf. In einer solchen Ausnehmung 8 sind das keilförmige Gleitelement 4 und das Stellelement 6 so angeordnet, dass deren geneigte Flächen 5 und 7 gegeneinander anliegen und die Oberseite des Stellelements 6 und Unterseite des Gleitelements 4 parallel angeordnet sind.

Das Gleitelement 4 ist an seiner größten Stirnseite im Schlitten 3 durch ein in der Zeichnung nicht dargestelltes Widerlager gehalten, während das Stellelement 6 mittels einer Druckfeder 9 in Richtung auf die größte Stirnseite des Gleitelements 4 in einer Laufrichtung der Linearführung vorgespannt ist. Aufgrund der Vorspannung des Stellelements 6 ergibt sich eine Kraftkomponente auf das Gleitelement 4 senkrecht zur Laufbahn 2 der Schiene 1.

Wie genauer in den Figuren 2 und 6 gezeigt ist, weisen die aneinander anliegenden Flächen 5 und 7 des Gleitelements 4 bzw. Stellelements 6 korrespondierende Stufen dergestalt auf, dass die Stufen der Fläche 7 des Stellelements 6 aufgrund dessen Vorspannung bei entsprechendem Spiel über die Stufen der geneigten Fläche 5 des Gleitelements 4 gleiten können. Bei der in Fig. 1 angegebenen Belastungsrichtung A wird das Stellelement 6 über die Stufen des Gleitelements 4 so weit verschoben, bis das verbleibende Lagerspiel kleiner als die Stufenhöhe ist. Dabei ist das Stellelement 6 so angeordnet, dass es über den möglichen Verschiebeweg weder unten an die Schiene 1 noch an seiner kleinsten Stirnseite an dem in der Zeichnung nicht dargestellten Widerlager für das Gleitelement 4 anstößt.

Wie genauer aus Fig. 2 hervorgeht, weisen die Stufen der geneigten Fläche 5 des Gleitelements 4 bzw. des Stellelements 6 im Wesentlichen parallel zu den Laufrichtungen der Linearführung verlaufende Abschnitte 10 und in Richtung der Vorspannung des Stellelements 6 mit einem Winkel < 90° ansteigende Abschnitte 11 auf. Der Winkel der ansteigenden Abschnitte ist so gewählt, dass er über dem Selbsthemmungswinkel und unter dem Verkeilungswinkel der Linearführungsanordnung liegt.

Wie im Detail Fig. 6 zeigt, fallen die im Wesentlichen parallel zu den Laufrichtungen der Linearführung verlaufenden Abschnitte 10 in Richtung der Vorspannung des Stellelements 6 leicht ab. Dies hat zur Folge, dass in dem Fall, dass das verbleibende Lagerspiel null ist und die Stufenkanten der Fläche 7 des Stellelements 6 über die Stufenkanten der Fläche 5 des Gleitelements 4 gleiten, beim Weiterverschieben des Stellelements 6 aufgrund der Vorspannung bis zum nächsten Stufenabschnitt sich das in Fig. 6 angegebene Mindestspiel S einstellt. Mit dieser Maßnahme wird gewährleistet, dass sich bei der automatischen Spieleinstellung der Linearführung auf jeden Fall ein Mindestspiel der Größe S ergibt.

Die Anordnung der aus dem Gleitelement 4 und der Laufbahn 2 der Schiene 1 bestehenden Gleitpaarungen an der Schiene 1 und dem Schlitten 3 geht aus den Figuren 3, 4 und 7, 8 hervor. Schiene 1 und Schlitten 3 sind im Wesentlichen symmetrisch ausgebildet, wobei die Schiene 1 eine T-förmige Gestalt und der Schlitten 3 eine entsprechend geformte Laufnut 12 aufweisen. Die Schiene 1 weist zwei Paar gegenüberliegender und senkrecht zur normalen Belastungsrichtung A des Schlittens 3 angeordneter erster Laufbahnen 2 und ein Paar gegenüberliegender und senkrecht zu den ersten Laufbahnen angeordneter zweiter Laufbahnen 2 auf. Zur automatischen Einstellung eines vertikalen und seitlichen Lagerspiels sind den Laufbahnen 2, deren Flächennormalen der normalen Belastungsrichtung A des Schlittens 3 entgegengerichtet sind, und einer der seitlichen Laufbahnen jeweils ein Gleitelement 4 der vorstehend beschriebenen Art mit geneigter Fläche 5 und ein entsprechendes Stellelement 6 zugeordnet. Den übrigen Laufbahnen sind im Wesentlichen quaderförmige Gleitelemente 13, die im Schlitten 3 gegen Verschieben gesichert sind, zugeordnet.

Die gegen den Schlitten anliegenden Flächen 14 der Stellelemente 6 und die gegen den Schlitten 3 anliegenden Flächen 15 der Gleitelemente 13 sind teilzylindrisch ausgebildet, um den Ausgleich von Parallelitätsfehlern durch entsprechende Drehung der Gleitelemente 4 und 13 bei der Linearführung auszugleichen.

In den Figuren 3 und 7 ist ferner die Schnittlinie F-F angegeben, aus der sich der Längsschnitt gemäß den Figuren 1 bzw. 5 ergibt.

### Linearführung

### Bezugszeichenliste

- 1: Schiene
- 2: Laufbahn
- 3: Schlitten
- 4: Gleitelement
- 5: geneigte Fläche
- 6: Stellelement
- 7: Fläche
- 8: Ausnehmung
- 9: Druckfeder
- 10: Abschnitt
- 11: Abschnitt
- 12: Laufnut
- 13: Gleitelement
- 14: Fläche
- 15: Fläche

## Patentansprüche

1. Linearführung mit einer Schiene (1), die mehrere Laufbahnen (2) aufweist, und einem Schlitten (3), der den Laufbahnen (2) gegenüberliegend mindestens ein Gleitelement (4) umfasst, das an der von der Schiene (1) abgewandten Seite eine bezüglich der Laufrichtungen der Linearführung geneigte Fläche (5) aufweist, wobei zwischen dem Gleitelement (4) und dem Schlitten (3) ein in den Laufrichtungen der Linearführung verschiebbares Stellelement (6) vorgesehen ist, das mit einer Fläche (7) an der geneigten Fläche (5) des Gleitelements (4) verschiebbar anliegt, **dadurch gekennzeichnet, dass** das Stellelement (6) gegen die geneigte Fläche (5) des Gleitelements (4) vorgespannt ist, so dass sich eine Kraftkomponente auf das Gleitelement (4) senkrecht zu den dem Gleitelement (4) gegenüberliegenden Laufbahnen (2) ergibt, und die aneinander anliegenden Flächen (7, 5) des Stellelements (6) und Gleitelements (4) korrespondierende Stufen dergestalt aufweisen, dass die Stufen der betreffenden Fläche (7) des Stellelements (6) aufgrund dessen Vorspannung bei entsprechendem Spiel über die Stufen der geneigten Fläche (5) des in Richtung der Laufbahnen der Schiene (1) bewegten Gleitelements (4) gleiten können.

2. Linearführung nach Anspruch 1, **dadurch gekennzeichnet, dass** die Stufen der geneigten Fläche (5) des Gleitelements (4) im Wesentlichen parallel zu den Laufrichtungen der Linearführung verlaufende Abschnitte (10) und in Richtung der Vorspannung des Stellelements (6) mit einem Winkel < 90° ansteigende Abschnitte (11) aufweisen.

3. Linearführung nach Anspruch 2, **dadurch gekennzeichnet, dass** die im Wesentlichen parallel zu den Laufrichtungen der Linearführung verlaufenden Abschnitte (10) der Stufen in Richtung der Vorspannung des Stellelements (6) leicht abfallen.

4. Linearführung nach Anspruch 3, **dadurch gekennzeichnet, dass** die im Wesentlichen parallel zu den Laufrichtungen der Linearführung verlaufenden Abschnitte (10) der Stufen über eine Höhe senkrecht zu den Laufrichtungen zwischen 0,01 und 0,1 mm abfallen.

5. Linearführung nach Anspruch 4, **dadurch gekennzeichnet, dass** die im Wesentlichen parallel zu den Laufrichtungen der Linearführung verlaufenden Abschnitte (10) der Stufen über eine Höhe senkrecht zu den Laufrichtungen zwischen 0,01 und 0,05 mm abfallen.

6. Linearführung nach einem der Ansprüche 2-5, **dadurch gekennzeichnet, dass** die ansteigenden Abschnitte (11) der Stufen der geneigten Fläche (5) des Gleitelements (4) eine Höhe senkrecht zu den Laufrichtungen der Linearführung zwischen 0,02 und 0,2 mm aufweisen.

7. Linearführung nach Anspruch 6, **dadurch gekennzeichnet, dass** die ansteigenden Abschnitte (11) der Stufen der geneigten Fläche (5) des Gleitelements (4) eine Höhe senkrecht zu den Laufrichtungen der Linearführung zwischen 0,02 und 0,1 mm aufweisen.

8. Linearführung nach einem der Ansprüche 1-7, **dadurch gekennzeichnet, dass** das Stellelement (6) durch eine parallel zu den Laufrichtungen der Linearführung an ihm angreifende Druckfeder (9) vorgespannt ist.

9. Linearführung nach einem der Ansprüche 1-8, **dadurch gekennzeichnet, dass** die geneigte Fläche (5) des Gleitelements (4) teilzylindrisch ausgebildet ist und gegen eine entsprechend konkav geformte Fläche (7) des Stellelements (6) anliegt.

10. Linearführung nach einem der Ansprüche 1-8, **dadurch gekennzeichnet, dass** die gegen das Gleitelement (4) anliegende Fläche (7) oder eine dieser gegenüberliegende, am Schlitten (3) anliegende Fläche des Stellelements (6) teilzylindrisch ausgebildet ist.

11. Linearführung nach einem der Ansprüche 1-10, **dadurch gekennzeichnet, dass** das Gleitelement (4) aus einem hoch verschleißfesten Kunststoff mit niedrigem Reibwert besteht.

12. Linearführung nach einem der Ansprüche 1-11, **dadurch gekennzeichnet, dass** die Schiene (1) zwei Paar gegenüberliegender und senkrecht zur normalen Belastungsrichtung (E) des Schlittens (3) angeordneter, erster Laufbahnen (2) und ein Paar gegenüberliegender und senkrecht zu den ersten Laufbahnen angeordneter, zweiter Laufbahnen (2) aufweist.

13. Linearführung nach Anspruch 12, **dadurch gekennzeichnet, dass** von den ersten Laufbahnen (2) diejenigen, deren Flächennormalen der normalen Belastungsrichtung (E) des Schlittens (3) entgegengesetzt gerichtet sind, und eine der zweiten Laufbahnen (2) jeweils einem Gleitelement (4) mit geneigter Fläche (5) und Stellelement (6) zugeordnet sind.

## Claims

1. Linear guide with a rail (1) having several running tracks (2), and a carriage (3) with at least one sliding element (4), which is opposite the running tracks (2) and has a surface (5) on the side facing away from the rail (1) that is inclined relative to the running direction of the linear guide, where an adjuster (6) that is provided between the sliding element (4) and the carriage (3) can be shifted in the running directions of the linear guide and has a surface (7) resting in shiftable fashion against the inclined surface (5) of the sliding element (4), **characterised in that** the adjuster (6) is pre-tensioned against the inclined surface (5) of the sliding element (4), meaning that a force component results on the sliding element (4) perpendicular to the running tracks (2) opposite the sliding element (4), and the contacting surfaces (7, 5) of the adjuster (6) and the sliding element (4) have corresponding steps, designed such that, due to the pretension of the adjuster (6) and with the corresponding clearance, the steps on the surface (7) of the adjuster (6) can slide over the steps on the inclined surface (5) of the sliding element (4) as it moves in the direction of the running tracks of the rail (1).

2. Linear guide as per Claim 1, **characterised in that** the steps on the inclined surface (5) of the sliding element (4) have sections (10) that are essentially parallel to the running directions of the linear guide, and sections (11) that rise at an angle of < 90° in the direction of the pre-tension of the adjuster (6).

3. Linear guide as per Claim 2, **characterised in that** the step sections (10) running essentially parallel to the running directions of the linear guide decline slightly in the direction of the pretension of the adjuster (6).

4. Linear guide as per Claim 3, **characterised in that** the step sections (10) running essentially parallel to the running directions of the linear guide decline over a height of between 0.01 and 0.1 mm perpendicular to the running directions.

5. Linear guide as per Claim 4, **characterised in that** the step sections (10) running essentially parallel to the running directions of the linear guide decline over a height of between 0.01 and 0.05 mm perpendicular to the running directions.

6. Linear guide as per one of Claims 2 to 5, **characterised in that** the rising sections (11) of the steps on the inclined surface (5) of the sliding element (4) have a height perpendicular to the running directions of the linear guide of between 0.02 and 0.2 mm.

7. Linear guide as per Claim 6, **characterised in that** the rising sections (11) of the steps on the inclined surface (5) of the sliding element (4) have a height perpendicular to the running directions of the linear guide of between 0.02 and 0.1 mm.

8. Linear guide as per one of Claims 1 to 7, **characterised in that** the adjuster (6) is pre-tensioned by a compression spring (9) that acts on it parallel to the running directions of the linear guide.

9. Linear guide as per one of Claims 1 to 8, **characterised in that** the inclined surface (5) of the sliding element (4) is of semi-cylindrical design and rests against a surface (7) of the adjuster (6) that has a correspondingly concave shape.

10. Linear guide as per one of Claims 1 to 8, **characterised in that** the surface (7) resting against the sliding element (4), or an opposite surface of the adjuster (6) that rests against the carriage (3), is of semi-cylindrical design.

11. Linear guide as per one of Claims 1 to 10, **characterised in that** the sliding element (4) is made of a highly wear-resistant plastic with a low coefficient of friction.

12. Linear guide as per one of Claims 1 to 11, **characterised in that** the rail (1) has two first pairs of running tracks (2) that are opposite one another and perpendicular to the normal load direction (E) of the carriage (3), and one second pair of running tracks (2) that are opposite one another and perpendicular to the first running tracks.

13. Linear guide as per Claim 12, **characterised in that**, of the first running tracks (2), those whose surface normals are opposite to the normal load direction (E) of the carriage (3), and one of the second running tracks (2), are each associated with a sliding element (4) with an inclined surface (5) and an adjuster (6).

## Revendications

1. Guidage linéaire comportant un rail (1) avec plusieurs voies de circulation (2), et un chariot (3) qui comprend à l'opposé des voies de circulation (2) au moins un élément de coulissement (4) qui présente une surface (5) inclinée par rapport aux directions de circulation du guidage linéaire sur le côté détourné du rail (1), un élément de réglage (6) mobile dans les directions de circulation du guidage linéaire étant prévu entre l'élément de coulissement (4) et le chariot (3) et prenant appui avec faculté de translation par une surface (7) sur la surface inclinée (5) de l'élément de coulissement (4), **caractérisé en ce que** l'élément de réglage (6) est précontraint contre la surface inclinée (5) de l'élément de coulissement (4), de sorte qu'il résulte une composante de force sur l'élément de coulissement (4) perpendiculairement aux voies de circulation (2) opposées à l'élément de coulissement (4), et les surfaces (7, 5) en appui mutuel de l'élément de réglage (6) et de l'élément de coulissement (4) comprennent des gradins correspondants, de telle sorte que les gradins de la surface concernée (7) de l'élément de réglage (6) peuvent coulisser par-dessus les gradins de la surface inclinée (5) de l'élément de coulissement (4), déplacé en direction des voies de circulation du rail (1), en raison de sa précontrainte et lors d'un jeu correspondant.

2. Guidage linéaire selon la revendication 1, **caractérisé en ce que** les gradins de la surface inclinée (5) de l'élément de coulissement (4) comprennent des tronçons (10) qui s'étendent sensiblement parallèlement aux directions de circulation du guidage linéaire ainsi que des tronçons (11) montant sous un angle < 90° en direction de la précontrainte de l'élément de réglage (6).

3. Guidage linéaire selon la revendication 2, **caractérisé en ce que** les tronçons (10) des gradins, qui s'étendent sensiblement parallèlement aux directions de circulation du guidage linéaire descendent légèrement en direction de la précontrainte de l'élément de réglage (6).

4. Guidage linéaire selon la revendication 3, **caractérisé en ce que** les tronçons (10) des gradins, qui s'étendent sensiblement parallèlement aux directions de circulation du guidage linéaire, descendent sur une hauteur, perpendiculairement aux directions de circulation, comprise entre 0,01 et 0,1 mm.

5. Guidage linéaire selon la revendication 4, **caractérisé en ce que** les tronçons (10) des gradins, qui s'étendent sensiblement parallèlement aux directions de circulation du guidage linéaire descendent sur une hauteur, perpendiculairement aux directions de circulation, comprise entre 0,01 et 0,05 mm.

6. Guidage linéaire selon l'une des revendications 2 à 5, **caractérisé en ce que** les tronçons (11) montant des gradins de la surface inclinée (5) de l'élément de coulissement (4) présentent une hauteur, perpendiculairement aux directions de circulation du guidage linéaire, comprise entre 0,02 et 0,2 mm.

7. Guidage linéaire selon la revendication 6, **caractérisé en ce que** les tronçons (11) montant des gradins de la surface inclinée (5) de l'élément de coulissement (4) présentent une hauteur, perpendiculairement aux directions de circulation du guidage linéaire, comprise entre 0,02 et 0,1 mm.

8. Guidage linéaire selon l'une des revendications 1 à 7, **caractérisé en ce que** l'élément de réglage (6) est précontraint par un ressort de compression (9) qui l'attaque parallèlement aux directions de circulation du guidage linéaire.

9. Guidage linéaire selon l'une des revendications 1 à 8, **caractérisé en ce que** la surface inclinée (5) de l'élément de coulissement (4) est réalisée partiellement cylindrique et prend appui contre une surface (7) de l'élément de réglage (6) formée concave en correspondance.

10. Guidage linéaire selon l'une des revendications 1 à 8, **caractérisé en ce que** la surface (7) prenant appui contre l'élément de coulissement (4) ou bien une surface de l'élément de réglage (6) opposée à celle-ci et prenant appui contre le chariot (3) est réalisée partiellement cylindrique.

11. Guidage linéaire selon l'une des revendications 1 à 10, **caractérisé en ce que** l'élément de coulissement (4) est constitué en une matière plastique hautement résistante à l'usure et présentant un faible coefficient de friction.

12. Guidage linéaire selon l'une des revendications 1 à 11, **caractérisé en ce que** le rail (1) comprend deux paires de premières voies de circulation (2) opposées et agencées perpendiculairement à la direction de charge normale (E) du chariot (3), et une paire de deuxièmes voies de circulation (2) opposées et agencées perpendiculairement aux premières voies de circulation.

13. Guidage linéaire selon la revendication 12, **caractérisé en ce que** parmi les premières voies de circulation (2), celles dont les normales à la surface sont dirigées en sens opposé à la direction de charge normale (E) du chariot (3), et l'une des deuxièmes voies de circulation (2) sont associées chacune à un élément de coulissement (4) comprenant une surface inclinée (5) et un élément de réglage (6).
